Europäisches Patentamt

European Patent Office

Office européen des brevets

(11) Publication number: 0 429 138 A1

## EUROPEAN PATENT APPLICATION

(21) Application number: 90203048.5

(22) Date of filing: 19.11.90

(51) Int. Cl.⁵: A01B 59/041, A01B 15/20

(30) Priority: 20.11.89 NL 8902850

(43) Date of publication of application:
29.05.91 Bulletin 91/22

(84) Designated Contracting States:
DE FR GB NL

(71) Applicant: C. van der Lely N.V.
Weverskade 10 P.O. Box 26
NL-3155 ZG Maasland(NL)

(72) Inventor: van der Lely, Cornelis
10, Werverskade, P.O. Box 26
NL-3155 ZG Maasland(NL)

(74) Representative: Mulder, Herman et al
Octrooibureau Van der Lely N.V. Weverskade
10 P.O. Box 26
NL-3155 ZG Maasland(NL)

(54) A soil cultivating machine.

(57) A soil cultivating machine comprises a frame (3) with two soil cultivating units (2), e.g. rotary harrows, the frame (3) being coupled to the front side of a tractor (1). The machine includes at least one sta-bilizing member, e.g. a plough body (28), a ground wheel (41) and/or a plate (33), capable of absorbing lateral forces.

FIG.3

EP 0 429 138 A1

# A SOIL CULTIVATING MACHINE

The invention relates to a soil cultivating machine comprising a frame, a drive for the soil working members and coupling points for coupling the machine to a tractor.

When in soil cultivating machines of the above-defined type the soil working members are arranged at the front side of the tractor, during travel, such forces are exercised thereon that it is difficult to keep the desired direction of travel. This will be even more difficult when a further soil working implement, e.g. a plough, is attached at the rear side of the tractor, as then relatively strong lateral forces play a role during operation.

Using the construction in accordance with the invention, the above-stated drawbacks can be obviated by providing the machine with at least one stabilizing member that is capable of absorbing lateral forces. When the construction according to the invention is used, the lateral forces exercised, during operation, on the machine or on the tractor can substantially not, or absolutely not, have a disadvantageous effect on the desired forward travel of the machine. In this connection, the soil cultivating machine may also be arranged at the front side of a tractor which at its rear side is provided with a plough.

A further feature of the invention relates to a soil cultivating machine of the above-defined type, which machine is provided with a plough body which, during operation, is located in the furrow already made. By means of the said plough body, laterally directed forces can be absorbed. In this connection, according to the invention it is advantageous that a stabilizing member is arranged at the front side of the machine.

A still further feature of the invention relates to a soil cultivating machine of the above-defined type, in which, mounted at the front side of the tractor, there are rotary harrows, each of which is provided wi&ha stabilizing member that is supported in a furrow already made. According to the invention, the stabilizing member may be a ground wheel which, during operation, is supported in the furrow.

According to a special embodiment of the invention, the soil cultivating machine comprises a frame, a drive for the soil working members and coupling points for coupling the machine to a tractor, as well as a ground wheel, or the like, which is located in the furrow during operation. The connection of the machine to the tractor may be a three-point lifting hitch, but the machine may also be designed such that it is coupled rigidly to the tractor.

In the above embodiments, according to the invention, it is furthermore advantageous that there is present a stabilizing member which is constituted by a support extending in the direction of operative travel and moving along a wall of a previously made furrow, during operation. According to a special embodiment, it is furthermore also advantageous that the stabilizing member includes a plate which is arranged rigidly to the machine and which, during operation, is located in the furrow. According to an equally possible embodiment, the stabilizing member is constituted by a plough body. Furthermore, according to the invention, it is also possible, e.g. when the machine is a large one, that as stabilizing members there are present a plough body, a ground wheel as well as a plate. In this connection, it is advantageous that the plate bears at the same side against a furrow wall as the ground wheel, while the plough body bears against the opposite furrow wall, the arrangement being such that the ground wheel and/or the plate and the plough body are capable of absorbing oppositely directed forces. In this connection, according to the invention, a good result is also obtained when the plough body is arranged in front of the ground wheel or, in an other possibility, that the plate is located behind the plough body and the ground wheel.

In order to arrive at a proper adjustment of the machine, the stabilizing member is adjustable in the direction of operative travel as well as transversely thereto. According to the invention, it is also advantageous that the ground wheel is fitted to the frame of the implement by means of a parallelogram construction. In this connection, it is desirable that the parallelogram construction includes arms which extend in the direction of operative travel and can be adjusted to and locked in a plurality of positions. In this connection, a well-operable construction can also be obtained when the arms are adjustable by means of an adjusting cylinder. According to the invention, a further improvement is that the ground wheel is rotatable about a shaft which encloses an angle with the horizontal. In this connection, it is of importance that the shaft is located in a vertical plane extending transversely to the direction of operative travel of the machine. The machine according to the invention is designed such that it allows of a variety of combinations. According to one of these combinations, the machine includes a rear-mounted reversible plough, in addition to the rotary harrows which are provided near the front side of the tractor and are capable of pivoting about a shaft extending in the direction of operative travel. The invention furthermore includes that the rotary harrows form a combination with a pneumatic seed drill, the hopper of which is located centrally in front of the tractor. In this connection, the drive for the rotary harrow and for the pneumatic seed drill is obtained from the power take-off shaft at the front side of the tractor.

For a better understanding of the present invention and to show how the same may be carried into effect, reference will now be made, by way of example, to the accom panying drawings of some embodiments, in which drawings:

Figure 1 is a schematic plan view of a machine according to the invention;

Figure 2 shows a second embodiment of a machine according to the invention, including a stabilizing member formed by a wheel that is arranged in two different manners;

Figure 3 shows an embodiment of a machine of the invention, in which in front of the stabilizing members there is arranged a plough body, the stabilizing members being arranged in accordance with the embodiment of Figure 2.

The implement shown in the drawings comprises two front-mounted soil cultivating/seed drill units 2 arranged at either side of a tractor 1.

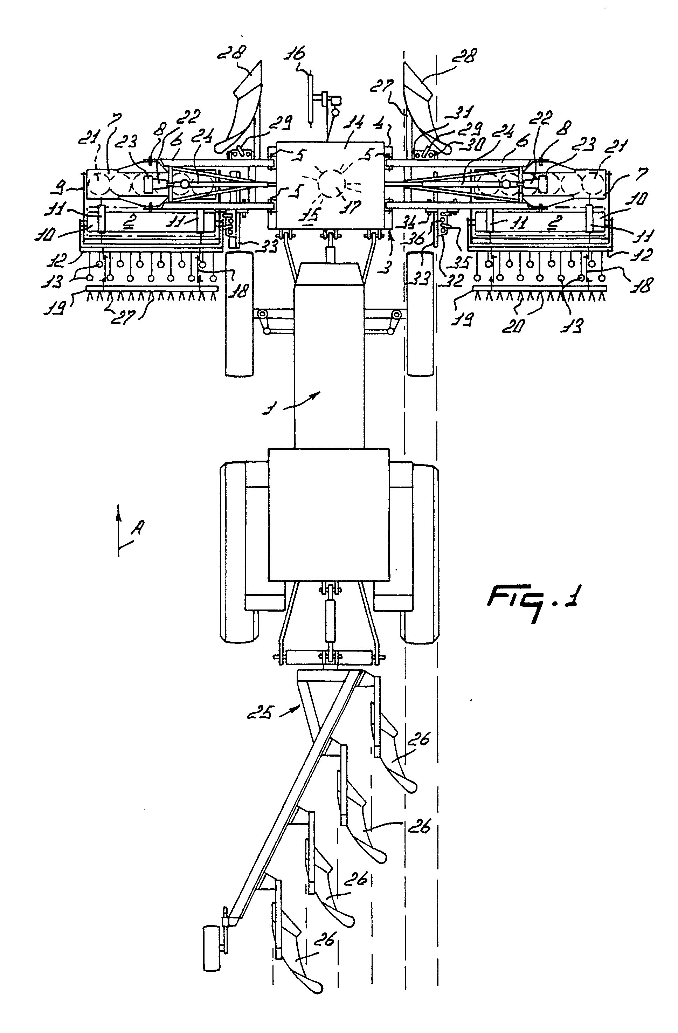

The two units 2, which during operation cultivate a strip of soil beside the tractor 1, are mounted on a frame 3. The frame 3 includes a central portion 4 provided with coupling points for connection to a three-point lifting hitch at the front side of the tractor 1. At opposite sides of the central portion 4 there are arranged pivotal portions 6 by means of shafts 5 which extend in the direction of operative travel A and are in alignment. Near the ends facing away from the central portion, the pivotal portions 6 are fitted with a box-like frame portion 7 which extends transversely to the direction of operative travel A and is pivotal about a shaft 8 extending parallel to the shafts 5. Inside the frame portion 7 there are supported in a row extending transversely to the direction of operative travel A six soil working members, which are capable of rotating about upwardly directed, preferably vertical, shafts. At the ends of the frame portion 7, which frame portion accommodates the drive for the soil working members, there are mounted pivotally rearwardly extending arms 9. A roller 10 is arranged freely rotatably between the arms 9. By means of adjusting means 11 located near the ends of the box-like frame portion, the arms 9 are pivotal relative to the box-like frame portion 7, the arrangement being such that by means of the roller 10 the working depth of the rotary soil working members can be determined. The assembly of frame portion 7, soil working members and roller 10 forms a rotary harrow which, in a manner to be described hereinafter, is drivable from the power take-off shaft at the front side of the tractor. Behind the roller 10 there is arranged a carrier 12 for accommodating the seed coulters 13, the carrier 12 being pivotal about the shafts of the roller. The seed coulters 13 are connected via (non-shown) flexible tubes to the hopper 14, located on the central portion 4, of a pneumatic seed drill 15. The seed drill 15 furthermore includes a dosing mechanism, which is drivable via a front-mounted stepper wheel 16, and a fan, by means of which the seed material conveyed from the hopper by the dosing mechanism can be fed via a distributing mechanism 17 located above the hopper and via the tubes to the seed coulters 13. At the rear side of the seed coulters 13 there is arranged pivotably about arms 18 a carrier 19 provided with spring-fitted tines 20, the arms 18 extending in the direction of operative travel A. The drive for the soil working members of the respective rotary harrows of the units 2 includes drivingly interconnected gear wheels 21 which are arranged on the shafts of the soil working members and are accommodated inside the box-like frame portion 7. Near the centre, the shaft of a soil working member is extended and reaches to into a gear box 22 located on the upper side of the box-like frame portion 7. Inside the gear box 22, the extension is connected via a bevel gear transmission to a shaft which extends transversely to the direction of operative travel A and via a speed variator 23 located at the outside of the gear box is drivingly interconnected to a shaft projecting from the gear box at the inner side thereof. The last-mentioned shaft is connected via a telescopic intermediate shaft 24 having universal joints to a (non-shown) gear box on the central portion 4, via which there can be obtained a drive from the power take-off shaft at the front side of the tractor. This gear box also provides a drive for the fan of the pneumatic seed drill 15. The above-described implement, which is mounted at the front side of the tractor and includes the units 2, can operate in combination with a reversible plough 25 which is connected at the rear side to the lifting hitch of the tractor and, in this embodiment, comprises four pairs of plough bodies 26. When the combination, which is shown in plan view in Figure 1, is in operation, the right-hand soil cultivating/seed drill unit 2 works a strip of soil, while the left-hand unit 2 is in a lifted intermediate position. The strip of soil worked by the soil cultivating/seed drill unit 2 was ploughed by the plough 25 in a preceding operating run. During travel of the combination, the operative plough bodies 26 produce reaction forces which are directed to the left (Figure 1). In certain circumstances, this may have as a result that the operative unit 2 cannot easily be kept in the right track. In order to ensure nevertheless the desired travel of the unit, a pivotal frame portion 6 is provided with a carrier 27 supporting a plough body 28, which plough body moves through the furrow during operation. By means of a pin 29 and apertures 30, the carrier 27 is arranged in lugs 31 provided at the leading side of the frame portion 6, the arrangement being such that the carrier can be adjusted to a plurality of positions by lateral displacement. In addition, at the rear side of the pivotal frame portion there is arranged a plate section 33 by means of a support 32. Using bolts 34, the support 32 can be adjusted to a plurality of positions with respect to the frame portion 6. Using pins 35 and apertures 36 in the support, the plate 33 can be adjusted in the direction of operative travel. The adjustability of the plough body 28 and/or of the plate 33 allows an adaptation to prevailing soil conditions. The plough body 28 and the plate 33 together constitute a supporting stabilizing member. During travel through the furrow, the plough body performs a cleaning action, so that the plate 33 can optimally bear against the upward furrow wall. The plough member absorbs lateral forces which are directed oppositely to those absorbed by the plate 33. Consequently, the drive of a unit 2 is effected independently of the drive of the tractor.

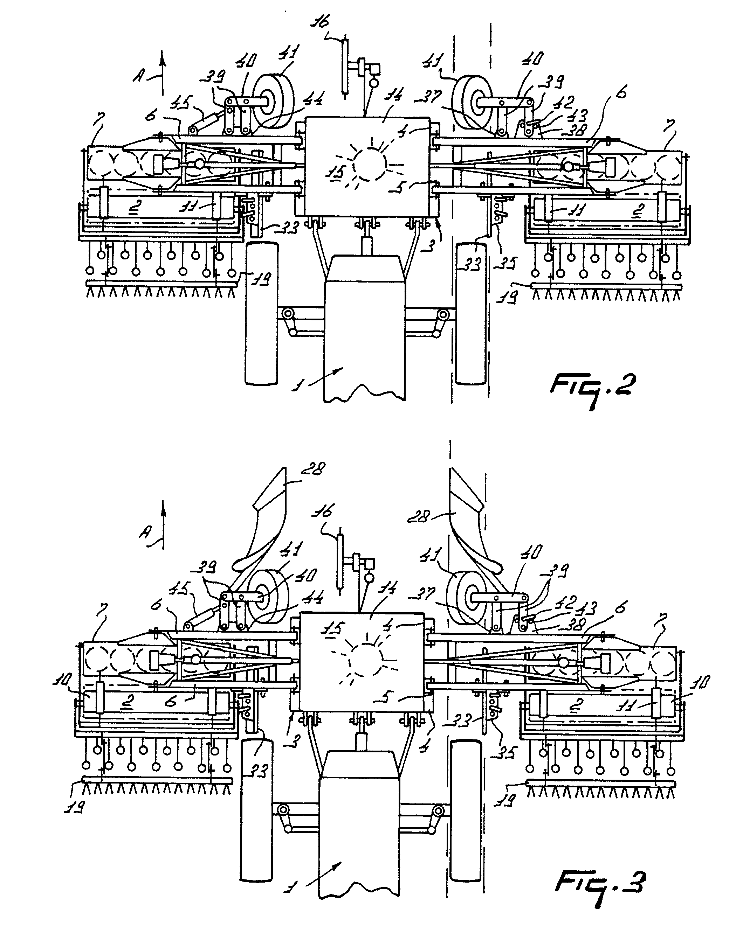

In Figure 2 there is shown an embodiment wherein two spaced-apart supports 37 and 38 are arranged at the leading side of a pivotal frame portion 6. At the supports there are arranged pivotally two forwardly extending arms 39. At their leading sides, the arms 39 are connected pivotally to a carrier 40, so that a parallelogram is formed. The carrier 40 extends obliquely downwardly and transversely to the direction of operative travel and by means of its lower end constitutes an oblique rotary shaft for ground wheel 41. During operation, the ground wheel 41 assumes a position as is shown in Figure 2 at the right-hand side, in which situation this ground wheel bears on the bottom of the furrow as well as against the upright wall thereof. By means of a pin 42 and apertures 43 in the support 38, the right-hand arm 39 can be adjusted to and locked in a plurality of positions in order that the position of the wheel 41 can be adapted to the prevailing conditions. At the left-hand side of Figure 2 there is shown an example of a second embodiment for arranging a ground wheel 41. In this embodiment, the arms 39 are arranged at a common support 44, while between the arm 39 facing away from the central frame portion 4 and the pivotal frame portion 6 there is provided an adjusting cylinder 45 which, during operation, may be connected to the hydraulic circuit of the tractor, the arrangement being such that, using the adjusting cylinder, the position of the arms 39 and hence that of the ground wheel 41 can be adapted. In this embodiment, too, there are present the plates 33 which are adjustable in the direction of operative travel A and transversely thereto, and which co-operate with an upright wall of the furrow. The plates 33 bear against the same upright wall of the furrow as the wheel 41. The wheel 41 constitutes an additional supporting stabilizing member.

In the embodiment shown in Figure 3, the carrier for the ground wheel 41 is fitted with a carrier arm 46 which, at its leading end, is provided with a plough body 28. In this embodiment, there are present three stabilizing means which, during operation, co-operate with the walls of the furrow and guide the implement, viz. the plate 33, the ground wheel 41 and the plough body 28 located in the furrow in front thereof. The use of the stabilizing means formed by these members can achieve that in a combination as shown in Figure 1, in spite of the lateral forces exercised on the operative plough bodies 26 of the reversible plough 25 behind the tractor, an effective drive and a straight run of the units 2 are ensured, so that they can be employed in an optimum manner. Also when the plough 25 is not employed, the said stabilizing means individually or in combination provide an appropriate run of the operative unit.

The invention is not limited to the features described in the foregoing, but also relates to all the details shown in the drawings, whether they have been described or not.

## Claims

1. A soil cultivating machine comprising a frame (3), a drive (21, 22, 23, 24) for the soil working members and coupling points for coupling the machine to a tractor (1), characterized in that the machine includes at least one stabilizing member (28, 33, 41) that is capable of absorbing lateral forces.

2. A soil cultivating machine as claimed in claim 1, characterized in that at its rear side the machine includes coupling means for coupling to a tractor (1).

3. A soil cultivating machine as claimed in claim 1 or 2, characterized in that the machine is coupled to the front side of a tractor (1), which tractor at its rear side is provided with a plough (25).

4. A soil cultivating machine as claimed in any one of the preceding claims, characterized in that the stabilizing member is constituted by a plough body (28) which, during operation, is located in the previously made furrow.

5. A soil cultivating machine as claimed in any one of the preceding claims, characterized in that a stabilizing member (28, 41) is arranged at the front side of the machine.

6. A soil cultivating machine as claimed in any one of the preceding claims, characterized in that the soil working members constitute part of two front-mounted rotary harrows (2), each of which is provided with a stabilizing member (28, 33, 41) that is supported in the furrow.

7. A soil cultivating machine comprising a frame (3), a drive (21, 22, 23, 24) for the soil working members and coupling points for coupling the machine a tractor (1), characterized in that the machine includes two front-mounted rotary harrows (2), each of which is provided with a stabilizing member (28, 33, 41) that is supported in the furrow.

8. A soil cultivating machine as claimed in any one of claims 4 to 7, characterized in that a stabilizing member is constituted by a ground wheel (41) which is located in the furrow, during operation.

9. A soil cultivating machine comprising a frame (3), a drive (21, 22, 23, 24) for the soil working members and coupling points for coupling the machine to a tractor (1), characterized in that the machine includes a ground wheel (41), or the like, which is located in the furrow, during operation.

10. A soil cultivating machine as claimed in any one of the preceding claims, characterized in that the machine includes a ground wheel (41) and a plough body (28), which are located in a previously made furrow, during operation.

11. A soil cultivating machine comprising a frame (3), a drive (21, 22, 23, 24) for the soil working members and coupling points for coupling the machine to a tractor (1), characterized in that the machine includes a ground wheel (41) and a plough body (28) which move in the furrow, during operation.

12. A soil cultivating machine as claimed in any one of the preceding claims, characterized in that there is present a stabilizing member which is constituted by a support (33) which extends in the direction of operative travel and, during operation, moves along a wall of a previously made furrow.

13. A soil cultivating machine as claimed in any one of the preceding claims, characterized in that the stabilizing member comprises a plate (33) which, during operation, is located in the furrow and is fitted rigidly to the machine.

14. A soil cultivating machine as claimed in any one of the preceding claims, characterized in that the stabilizing member is constituted by a plough body (28).

15. A soil cultivating machine as claimed in any one of the preceding claims, characterized in that a plough body (28), a ground wheel (41) as well as a plate (33) are present as stabilizing members.

16. A soil cultivating machine as claimed in claim 14, characterized in that the plate (33) bears at the same side against a furrow wall as the ground wheel (41), while the plough body (28) bears against the opposite furrow wall, the arrangement being such that the ground wheel (41) and/or the plate (33) and the plough body (28) are capable of absorbing oppositely directed forces.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2512628 (RABEWERK HEINRICH CLAUSING) <br> * page 7, line 21 - page 9, line 7; figure 8. * | 1, 2, 5, 8, 9, 11, 12. | A01B59/041 <br> A01B15/20 |
| X | FR-U-2061182 (BAYERISCHE PFLUGFABRIK GMBH) <br> * page 1, line 37 - page 3, line 6; figures 1, 2. * | 1, 5, 9, 11, 12. | |
| Y | | 3, 6, 7, 8. | |
| Y | FR-A-2622762 (COMPAGNIE FRANCAISE DE MACHINES AGRICOLES) <br> * pages 3 - 5; figure 1. * | 3, 6, 7, 8. | |
| A | DE-B-1195533 (PLOVFABRIKKEN SKJOLD A/S) <br> * column 4, line 14 - column 5, line 16; figures 1, 3. * | 13, 14. | |
| A | DE-C-875097 (J.GRAUERHOLZ) <br> * page 2, lines 44 - 53; figure 1 * | 13. | |

**TECHNICAL FIELDS SEARCHED (Int. Cl.5)**

A01B

The present search report has been drawn up for all claims

| Place of search | Date of completion of the search | Examiner |
|---|---|---|
| THE HAGUE | 20 FEBRUARY 1991 | WOHLRAPP R.G. |

EPO FORM 1503 03.82 (P0401)